# EUROPÄISCHE PATENTSCHRIFT

(11) **EP 2 117 931 B1**
(45) Veröffentlichungstag und Bekanntmachung des Hinweises auf die Patenterteilung: **24.09.2014**
(21) Anmeldenummer: 08707018.1
(22) Anmeldetag: 12.01.2008
(51) Int. Cl.: B64D 11/06

(54) **SITZBEDIENEINHEIT**
SEAT CONTROL UNIT
UNITÉ DE COMMANDE DE SIÈGE

(30) Priorität: 07.02.2007 DE 102007006033
(43) Veröffentlichungstag der Anmeldung: 18.11.2009
(73) Patentinhaber: Recaro Aircraft Seating GmbH & Co. KG, 74523 Schwäbisch Hall (DE)
(72) Erfinder: KRÄMER, Marco, 74549 Wolpertshausen (DE)
(74) Vertreter: Daub, Thomas
(86) Internationale Anmeldenummer: PCT/EP2008/000213
(87) Internationale Veröffentlichungsnummer: WO 2008/095580

(56) Entgegenhaltungen:
- WO-A-2006/042051
- DE-U1-202006 004 307
- GB-A- 2 293 443
- US-A1- 2002 153 776
- US-A1- 2003 174 499
- US-A1- 2005 151 489

## Beschreibung

### Stand der Technik

Die Erfindung geht aus von einer Sitzbedieneinheit nach dem Oberbegriff des Anspruchs 1.

Es sind bereits Sitzbedieneinheiten mit Leuchteinheiten bekannt.

### Vorteile der Erfindung

Die Erfindung geht aus von einer Sitzbedieneinheit, insbesondere Flugzeugsitzbedieneinheit, mit wenigstens einer Leuchteinheit.

Es wird vorgeschlagen, dass die Sitzbedieneinheit eine Einstelleinheit umfasst, die dazu vorgesehen ist, Lichtstärke und/oder Lichtfarbe der Leuchteinheit elektronisch einzustellen, und dass die Sitzbedieneinheit eine Prozessoreinheit aufweist, die dazu vorgesehen ist, zumindest einen Einstellvorgang wenigstens teilautomatisiert abhängig von wenigstens einer Kenngrösse einzustellen, wodurch insbesondere der Komfort erhöht werden kann. Beispielsweise kann abhängig von einer vorliegenden Raumbeleuchtung automatisch die Farbe und/oder die Lichtstärke der Sitzbedieneinheit eingestellt werden. Unter einer "Sitzbedieneinheit" soll dabei insbesondere eine Einheit verstanden werden, mittels der eine Person auf einem Sitz Eingaben, wie insbesondere Einstellungen, vornehmen kann. Die Sitzbedieneinheit kann dabei nur eine einer Sitzvorrichtung zugeordnete Eingabeeinheit oder auch mehrere einer und/oder auch mehreren Sitzvorrichtungen zugeordnete Eingabeeinheiten aufweisen.

Unter einer "Einstelleinheit, mittels der eine Lichtstärke und/oder eine Lichtfarbe elektronisch einstellbar ist", soll insbesondere eine Einheit verstanden werden, die eine Elektronik- und/oder vorzugsweise eine Prozessoreinheit umfasst und mittels der insbesondere ohne Austauschen von Leuchtmitteln verschiedene, insbesondere konstante, Lichtstärken, insbesondere ungleich Null, und/oder Lichtfarben realisierbar sind. Ferner soll unter "vorgesehen" insbesondere speziell ausgestattet, ausgelegt und/oder programmiert verstanden werden.

Durch eine entsprechende Ausgestaltung kann eine hohe Flexibilität erreicht werden, und zwar sowohl für einen Passagier und/oder auch insbesondere für einen Raumausstatter, wie insbesondere einen Flugzeugkabinenausstatter. Dabei ist die Einstelleinheit vorzugsweise dazu vorgesehen, dass zumindest einzelne Einstellungen nur von einem Fachpersonal vorgenommen werden können, so dass individuelle, unerwünschte Veränderungen durch einen Passagier vermieden werden können. Insbesondere kann die Sitzbedieneinheit mit geringem Aufwand an unterschiedliche Randbedingungen und insbesondere an unterschiedliche Kundenwünsche, wie insbesondere Flugzeuggesellschaften bzw. Airlines, angepasst werden. Es können bei einem großflächigen Einsatz Designaspekte vorteilhaft berücksichtigt werden, und zwar insbesondere, wenn mittels der Einstelleinheit zentral mehrere Leuchteinheiten, die mehreren Sitzvorrichtungen zugeordnet sind, eingestellt werden können. Ferner können durch Alterung bedingte Abdunklungen einfach ausgeglichen werden.

Vorzugsweise ist die Einstelleinheit dazu vorgesehen, zumindest teilweise in einer Sitzvorrichtung integriert zu werden, wodurch eine vorteilhafte einfache Ansteuerung erreicht werden kann. Dabei soll unter "integriert" insbesondere verstanden werden, dass zumindest ein Teil der Einstelleinheit gemeinsam mit einer Sitzvorrichtung, wie insbesondere mit einer Einzelsitzvorrichtung eines Flugzeugs, eine Montageeinheit bildet. Vorteilhaft ist zumindest ein Teil der Einstelleinheit auch zentral angeordnet, so dass mehrere Sitzbedieneinheiten, insbesondere auch mehrere Sitzreihen, vorteilhaft gemeinsam angesteuert werden können.

In einer weiteren Ausgestaltung der Erfindung wird vorgeschlagen, dass die Prozessoreinheit zumindest teilweise einstückig mit einer Sitzsteuerungseinheit ausgebildet ist, wodurch Bauteile, Gewicht, Montageaufwand und/oder Kosten eingespart werden können. Dabei soll unter einer "Prozessoreinheit" insbesondere eine Einheit verstanden werden, die einen Prozessor bzw. eine Recheneinheit und eine Speichereinheit mit einem darin gespeicherten Betriebsprogramm umfasst.

Die Leuchteinheit kann verschiedene, dem Fachmann als sinnvoll erscheinende Leuchtmittel aufweisen. Besonders vorteilhaft weist die Leuchteinheit jedoch wenigstens eine Leuchtdiode und/oder eine Leuchtfolie auf, die besonders Platz sparend integrierbar und ferner vorteilhaft zur Erzielung unterschiedlicher Lichtstärken und/oder Lichtfarben ansteuerbar sind. Unter Leuchtfolie soll in diesem Zusammenhang insbesondere eine mehrschichtig aufgebaute Folie verstanden werden, und zwar insbesondere mit einer von einer Rückenelektrode, einer von einem Isolator, einer von einem Leuchtstoff und einer von einer Frontelektrode gebildeten Schicht. Die Leuchteinheit kann dabei Leuchtdioden mit einer Farbe, mit unterschiedlichen Farben und/oder auch Leuchtdioden, die abhängig von einer anliegenden Spannung und/oder Frequenz unterschiedliche Lichtfarben abstrahlen, aufweisen.

Weist die Leuchteinheit Leuchtmittel auf, die dazu vorgesehen sind, Licht mit unterschiedlichen Farben abzustrahlen, kann konstruktiv einfach eine Einstellung erreicht werden, und zwar insbesondere, wenn die Einstelleinheit dazu vorgesehen ist, unterschiedliche Lichtfarben durch Mischen, insbesondere differenziertes Mischen, von Lichtfarben zu erzeugen, wobei zumindest eine Endfarbe durch Mischen von Licht von zumindest zwei Lichtquellen mit unterschiedlichen Farben erzeugt wird und/oder vorzugsweise zumindest abgestrahltes Licht mit einer bestimmten Farbe wenigstens einer Lichtquelle für zumindest zwei Endfarben genutzt wird.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Sitzvorrichtung in einer Seitenansicht und
- Fig. 2: eine schematische Darstellung einer Sitzbedieneinheit und einer Sitzsteuereinheit der Sitzvorrichtung aus Figur 1.

### Beschreibung des Ausführungsbeispiels

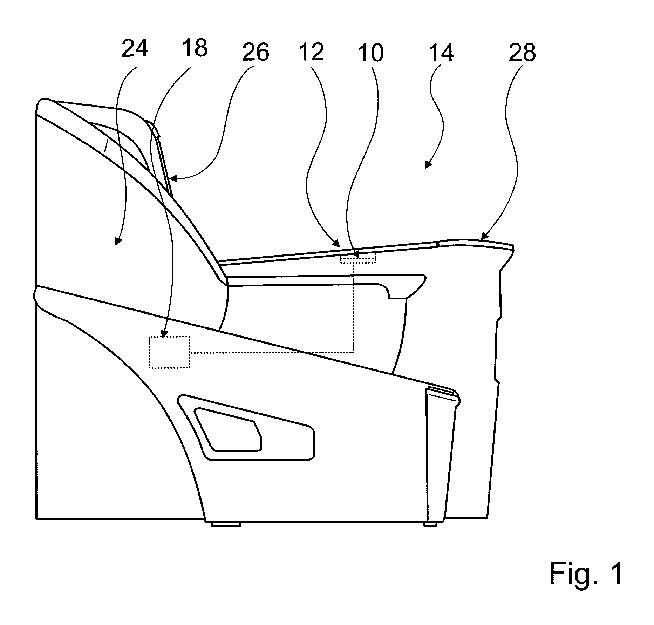

Figur 1 zeigt eine Sitzvorrichtung 14 eines Flugzeugs bzw. eine Flugzeugsitzvorrichtung in einer Seitenansicht mit einer Sitzumhausung 24, innerhalb der eine Rückenlehne 26 und ein nicht näher dargestellter Sitzboden angeordnet ist. Die Sitzvorrichtung umfasst eine Konsole 28 und eine darin integrierte Sitzbedieneinheit mit einer Leuchteinheit 10. Mittels der Sitzbedieneinheit kann über eine Sitzsteuerungseinheit 18 der Sitzvorrichtung der Sitzboden und die Rückenlehne 26 von einem Passagier verstellt werden.

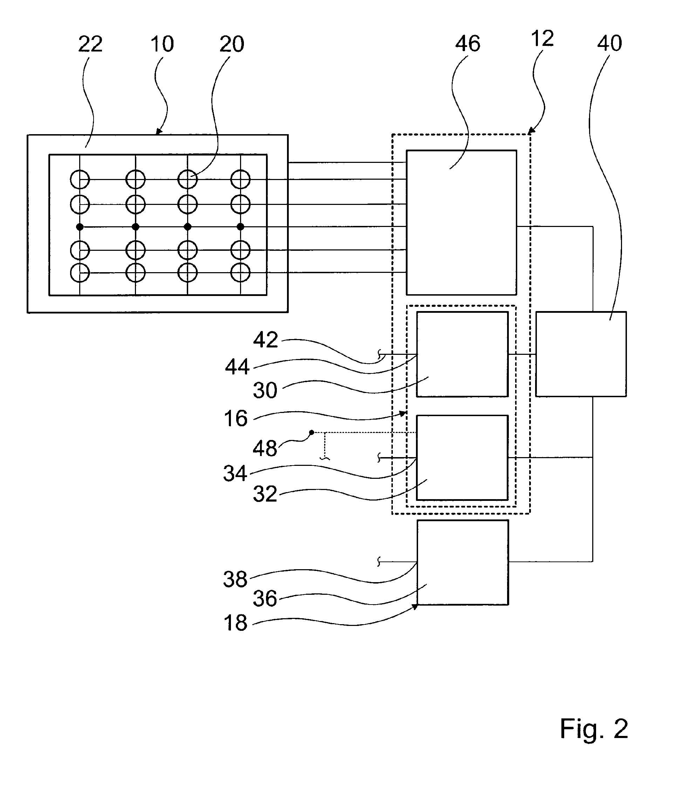

Die Sitzbedieneinheit weist eine Einstelleinheit 12 auf, die dazu vorgesehen ist, Lichtstärke und Lichtfarbe der Leuchteinheit 10 elektronisch, d.h. insbesondere ohne Austausch von Leuchtmitteln, einzustellen (Figur 2). Dabei ist die Einstelleinheit 12 dazu vorgesehen, ausschließlich von einem Fachpersonal, d.h. nicht von einem Passagier, bedient zu werden.

Die Einstelleinheit 12 umfasst eine Prozessoreinheit 16, die teilweise einstückig mit der Sitzsteuerungseinheit 18 ausgebildet ist, und zwar besitzen die Prozessoreinheit 16 und die Sitzsteuerungseinheit 18 eine gemeinsame Recheneinheit 30 bzw. einen gemeinsamen Prozessor. Ferner werden die Sitzsteuerungseinheit 18 und die Einstelleinheit 12 über eine gemeinsame Stromversorgungseinheit 40 mit Gleichstrom versorgt.

Die Einstelleinheit 12 umfasst zudem eine Speichereinheit 32, in der ein Betriebsprogramm gespeichert ist. Die Speichereinheit 32 weist eine Schnittstelle 34 auf, über die lokal an der Sitzvorrichtung 14 ein Betriebsprogramm ausgetauscht werden kann, und zwar indem ein neues Betriebsprogramm aufgespielt wird und/oder indem ein ausgewähltes Betriebsprogramm deaktiviert und ein bereits in der Speichereinheit 32 gespeichertes Betriebsprogramm aktiviert wird. Alternativ und/oder zusätzlich könnte ein Betriebsprogramm auch für mehrere Sitzvorrichtungen zentral in einer Speichereinheit angeordnet sein und/oder es könnte eine Schnittstelle 48 vorgesehen sein, über die auf mehrere Speichereinheiten zugegriffen werden kann, so dass zentral für mehrere Sitzvorrichtungen 14, insbesondere auch für mehrere Sitzreihen, das Betriebsprogramm geändert werden kann, wie dies in Figur 2 angedeutet ist. Die Sitzsteuerungseinheit 18 umfasst eine Speichereinheit 36 mit einem darin gespeicherten Betriebsprogramm, das über eine Schnittstelle 38 zentral ausgetauscht werden kann, d.h. es kann insbesondere für mehrere Sitzvorrichtungen 14 zentral gleichzeitig das Betriebsprogramm ausgetauscht werden.

Die Prozessoreinheit 16 ist zudem dazu vorgesehen, einen Einstellvorgang abhängig von einer vorliegenden Raumbeleuchtung durchzuführen. Hierfür werden der Prozessoreinheit 16 über einen Datenbus 42 und über eine Schnittstelle 44 Daten über die vorliegende Raumbeleuchtung zugeführt.

Die Leuchteinheit 10 weist eine Leuchtfolie 22 und mehrere Leuchtdioden 20 auf, die zur Ausstrahlung von Licht mit verschiedenen Farben vorgesehen sind. Mittels der Prozessoreinheit 16 werden die Leuchtfolie 22 und die Leuchtdioden 20 über einen Elektronikkontrollkonverter 46 angesteuert.

Die Leuchtfolie 22 ist dazu vorgesehen, Licht mit unterschiedlicher Stärke und unterschiedlichen Farben abzustrahlen, während die Prozessoreinheit 16 dazu vorgesehen ist, mittels den Leuchtdioden 20 unterschiedliche Lichtfarben durch mischen von Lichtfarben zu erzeugen.

### Bezugszeichen

- 10: Leuchteinheit
- 12: Einstelleinheit
- 14: Sitzvorrichtung
- 16: Prozessoreinheit
- 18: Sitzsteuerungseinheit
- 20: Leuchtdiode
- 22: Leuchtfolie
- 24: Sitzumhausung
- 26: Rückenlehne
- 28: Konsole
- 30: Recheneinheit
- 32: Speichereinheit
- 34: Schnittstelle
- 36: Speichereinheit
- 38: Schnittstelle
- 40: Stromversorgungseinheit
- 42: Datenbus
- 44: Schnittstelle
- 46: Elektronikkontrollkonverter
- 48: Schnittstelle

## Patentansprüche

1. Sitzbedieneinheit, insbesondere Flugzeugsitzbedieneinheit, mit wenigstens einer Leuchteinheit (10), mit einer Einstelleinheit (12), die dazu vorgesehen ist, Lichtstärke und Lichtfarbe der Leuchteinheit (10) elektronisch einzustellen, und mit einer Prozessoreinheit (16), die dazu vorgesehen ist, zumindest einen Einstellvorgang wenigstens teilautomatisiert abhängig von wenigstens einer Kenngröße einzustellen.

2. Sitzbedieneinheit nach Anspruch 1,
**dadurch gekennzeichnet, dass**
die Einstelleinheit (12) dazu vorgesehen ist, zumindest teilweise in einer Sitzvorrichtung (14) integriert zu werden.

3. Sitzbedieneinheit nach einem der vorhergehenden Ansprüche,
**dadurch gekennzeichnet, dass**
die Einstelleinheit (12) die Prozessoreinheit (16) umfasst.

4. Sitzbedieneinheit nach Anspruch 3,
**dadurch gekennzeichnet, dass**
die Prozessoreinheit (16) zumindest teilweise einstückig mit einer Sitzsteuerungseinheit (18) ausgebildet ist.

5. Sitzbedieneinheit nach einem der vorhergehenden Ansprüche,
**dadurch gekennzeichnet, dass**
die Leuchteinheit (10) wenigstens eine Leuchtdiode (20) aufweist.

6. Sitzbedieneinheit nach einem der vorhergehenden Ansprüche,
**dadurch gekennzeichnet, dass**
die Leuchteinheit (10) wenigstens eine Leuchtfolie (22) aufweist.

7. Sitzbedieneinheit nach einem der vorhergehenden Ansprüche,
**dadurch gekennzeichnet, dass**
die Leuchteinheit (10) Leuchtmittel aufweist, die dazu vorgesehen sind, Licht mit unterschiedlichen Farben abzustrahlen.

8. Sitzbedieneinheit nach Anspruch 7,
**dadurch gekennzeichnet, dass**
die Einstelleinheit (12) dazu vorgesehen ist, unterschiedliche Lichtfarben durch Mischen von Lichtfarben zu erzeugen.

9. Sitzvorrichtung (14), insbesondere Flugzeugsitzvorrichtung, mit einer Sitzbedieneinheit nach einem der vorhergehenden Ansprüche.

10. Verfahren mit einer Sitzbedieneinheit, die eine Leuchteinheit (10) umfasst, nach einem der Ansprüche 1 bis 8,
**dadurch gekennzeichnet, dass**
Lichtstärke und Lichtfarbe der Leuchteinheit (10) elektronisch eingestellt wird.

## Claims

1. Seat operation unit, particularly an aircraft seat operation unit, having at least one lighting unit (10), having an adjusting unit (12) which is provided to electronically adjust light intensity and light color of the lighting unit (10), and having a processor unit (16) which is provided to adjust at least one adjusting operation at least semi-automatically on the basis of at least one parameter.

2. Seat operation unit according to Claim 1,
**characterized in that**
the adjusting unit (12) is provided to be at least partially integrated in a seat apparatus (14).

3. Seat operation unit according to one of the preceding claims,
**characterized in that**
the adjusting unit (12) comprises the processor unit (16).

4. Seat operation unit according to Claim 3,
**characterized in that**
the processor unit (16) is at least partially integrally with a seat control unit (18).

5. Seat operation unit according to one of the preceding claims,
**characterized in that**
the lighting unit (10) has at least one light-emitting diode (20).

6. Seat operation unit according to one of the preceding claims,
**characterized in that**
the lighting unit (10) has at least one light-emitting foil (22).

7. Seat operation unit according to one of the preceding claims,
**characterized in that**
the lighting unit (10) has lighting means which are provided to emit light with different colors.

8. Seat operation unit according to Claim 7,
**characterized in that**
the adjusting unit (12) is provided to produce different light colors by mixing light colors.

9. Seat apparatus (14), particularly an aircraft seat apparatus, having a seat operation unit according to one of the preceding claims.

10. Method with a seat operation unit which comprises a lighting unit (10), according to one of Claims 1 to 8,
**characterized in that**
light intensity and light color of the lighting unit (10) are adjusted electronically.

## Revendications

1. Unité d'opération de siège, notamment unité d'opération de siège d'avion, avec au moins une unité d'éclairage (10), avec une unité de réglage (12) prévue pour régler de façon électronique la puissance de la lumière et la couleur de la lumière de l'unité d'éclairage (10) et avec une unité de processeur (16) prévue pour régler au moins un processus de réglage de façon au moins partiellement automatisée en fonction d'au moins une grandeur caractéristique.

2. Unité d'opération de siège selon la revendication 1, **caractérisée en ce que** l'unité de réglage (12) est prévue pour être intégrée au moins en partie dans un dispositif de siège (14).

3. Unité d'opération de siège selon l'une quelconque des revendications précédentes, **caractérisée en ce que** l'unité de réglage (12) comprend l'unité de processeur (16).

4. Unité d'opération de siège selon la revendication 3, **caractérisée en ce que** l'unité de processeur (16) est réalisée au moins en partie intégralement avec une unité de commande de siège (18).

5. Unité d'opération de siège selon l'une quelconque des revendications précédentes, **caractérisée en ce que** l'unité d'éclairage (10) comporte au moins une diode d'éclairage (20).

6. Unité d'opération de siège selon l'une quelconque des revendications précédentes, **caractérisée en ce que** l'unité d'éclairage (10) comporte au moins un film éclairant (22).

7. Unité d'opération de siège selon l'une quelconque des revendications précédentes, **caractérisée en ce que** l'unité d'éclairage (10) comporte des moyens d'éclairage prévus pour émettre de la lumière de différentes couleurs.

8. Unité d'opération de siège selon la revendication 7, **caractérisée en ce que** l'unité de réglage (12) est prévue pour produire différentes couleurs de lumière en mélangeant des couleurs de lumière.

9. Dispositif de siège (14), notamment dispositif de siège d'avion, avec une unité d'opération de siège selon l'une quelconque des revendications précédentes.

10. Procédé avec une unité d'opération de siège comprenant une unité d'éclairage (10), selon l'une quelconque des revendications 1 à 8, **caractérisé en ce que** la puissance de la lumière et la couleur de la lumière de l'unité d'éclairage (10) sont réglées de façon électronique.
